**Europäisches Patentamt**

**European Patent Office**

**Office européen des brevets**

(19)

(11) Publication number: **0 134 958**
**B1**

(12) # EUROPEAN PATENT SPECIFICATION

(45) Date of publication of patent specification: **11.05.88**

(51) Int. Cl.⁴: **B 32 B 15/08**, B 32 B 33/00

(21) Application number: **84107722.5**

(22) Date of filing: **20.05.80**

(80) Publication number of the earlier application in accordance with Art. 76 EPC: **0 019 835**

(54) **Formable metal-plastic-metal structural laminates.**

(30) Priority: **21.05.79 US 41441**
**21.05.79 US 41133**

(43) Date of publication of application:
**27.03.85 Bulletin 85/13**

(45) Publication of the grant of the patent:
**11.05.88 Bulletin 88/19**

(84) Designated Contracting States:
**BE DE FR GB IT NL SE**

(56) References cited:
**GB-A-1 092 716**
**GB-A-1 231 609**

(73) Proprietor: **THE DOW CHEMICAL COMPANY
2030 Dow Center Abbott Road P.O. Box 1967
Midland, MI 48640 (US)**

(72) Inventor: **Newman, Ritchey Owsley
36 Rosemary Court
Midland Michigan 48640 (US)**
Inventor: **Rieke, James Kirk
4715 Swede Road
Midland Michigan 48640 (US)**
Inventor: **Wright, Donald Ray
4615 Kingston Court
Midland Michigan 48640 (US)**
Inventor: **Tong, Wen-Hong
4508 Oakridge Drive
Midland Michigan 48640 (US)**

(74) Representative: **Weickmann, Heinrich, Dipl.-Ing. et al
Patentanwälte Dipl.-Ing. H.Weickmann Dipl.-Phys.Dr. K.Fincke Dipl.-Ing. F.A.Weickmann
Dipl.-Chem. B. Huber Dr.-Ing. H. Liska Dipl.-Phys.Dr. J. Prechtel Postfach 860820
D-8000 München 86 (DE)**

Courier Press, Leamington Spa, England.

## Description

This invention relates to steel-polyolefin-steel structural laminates which can be formed into various useful articles having compound curves using conventional metal forming techniques and to their preparation.

Metal plastic laminates are well known items of commerce. They include relatively thin laminates useful in flexible packaging end use applications as well as relatively thick laminates used as construction materials. Methods of preparing such laminates are also known. One method includes bringing at least one layer of plastic and at least one layer of metal into intimate contact and subjecting them to suitable heat and pressure, using, for example, a molding press. A more efficient and continuous method involves the well known extrusion processes — extrusion coating or extrusion lamination. Often an intermediate layer of adhesive or primer, in the form of a film or coating, is used in conjunction with these methods to ensure adequate adhesion between the metal substrate and plastic.

Metal plastic laminates have also been the subject of numerous patents. An exemplary selection of such patents includes U.S. Patent Nos. 3,298,559; 3,340,714; 3,348,995; 3,382,136; 3,542,605, 3,594,249; 3,616,019; 3,711,365 and 3,721,597. Most metal plastic laminates known in the art are satisfactory for many commercial uses as stated above. However, such laminates lack, among other things, satisfactory formability.

When an adhesive polymer containing polar functional groups is used as the plastic layer, the desired bond to the metal substrate is realized without use of any intermediate adhesive layer therebetween.

Polyolefins such as polyethylene and polypropylene are generally very difficult to bond to metal because they lack any polar functional groups. Therefore, polyolefins are usually bonded to metal using an intermediate adhesive layer containing polar functional groups, such as, for example, a layer of ethylene and acrylic acid copolymer. In addition to the intermediate adhesive layer, other methods are also employed to enhance the desired adhesion in metal-polyolefin laminates. In one of such methods, the metal surface is treated physically or chemically to provide a roughened surface or to deposit a thin layer of chemical conversion coating thereon. In another method, the surface of polyolefin is treated or modified with solvent, flame, chemical, or electric discharge.

Since the use of an intermediate adhesive layer introduces more complexity into the laminating process, with relatived process difficulties and the attendant increase in cost, a number of approaches have been proposed to bond polyolefins directly to different metal substrates.

In U.S. Patent 3,455,775, an aluminum plastic laminate is made by roughening the surfaces of a pair of aluminum sheets, followed by etching the surfaces with a sulfochromate solution, and thereafter autogenously bonding the treated surfaces of the sheets together under heat and pressure by inserting a thermoplastic layer therebetween.

In U.S. Patent 3,348,995, the adhesion to metal of polyethylene, density range of 0.910 to 0.940, is improved by the use of a thin high density polyethylene primer coat, density range of 0.941 to 0.965. More specifically, a layer of polyethylene having a density of 0.941 to 0.956 and thickness of up to 127 µm is applied to a metal heated to a temperature of at least 260.0°C. A subsequent application to the heated metal of a lower density polyethylene layer of greater thickness causes adhesion of the polyethylene layers to the metal.

U.S. Patent 3,826,628 discloses a metal-plastic laminate wherein a film of lower polyolefin is adhered directly to a steel substrate having on the surface thereon a chrome/chrome oxide coating. One major disadvantage of such laminate is that the adhesion between the polyolefin film and metal leaves much to be desired. More specifically, the adhesion value of the laminate is below 10 pounds per inch (1 pound per inch = 17.858 kg/m) of sample width, as measured by the modified ASTM D—903—49 described hereinbelow, insufficient to prevent delamination when the laminate is subjected to cold-forming by the so-called "draw-die" technique.

Accordingly, it is an object of this invention to provide a steel-polyolefin-steel structural laminate capable of being formed into an article using, for example, conventional metal-forming equipment.

The laminate of the present invention comprises two steel skin layers and a centrally disposed polyolefin comprising a core layer and optionally first and second adhesive layers. More specifically, the laminate comprises a core of polyolefin having tightly adhered to each side thereof a steel skin layer characterized in that each metal skin layer is from 50.8 to 508 µm thick, the ratio of the core thickness to the skin thickness is less than 9:1 and the total laminate thickness is from 127 to 1651 µm; the materials of construction of the polyolefin core and the steel skins and the geometry of the laminate are such that the laminate has (1) a flexural stiffness at least about 40 percent that of the solid metal of the skin layer of the lower flexural modulus having the same thickness as the laminate as measured by ASTM D—790 on a 2.54 cm wide sample having 10.16 cm span under three point loading conditions, (2) a density from 25 to 90 percent that of the average of two solid steel skin layers, (3) as a measure of stretch formability, a "limiting dome height" of at least about 60 percent of the limiting dome height of the solid steel of the skin layer of the lower ultimate elongation having the same thickness as the laminate, (4) the capability of being subjected to a no load oven test, subsequent to forming of the laminate, at a temperature of a least 87.8°C for a period of 30 minutes without delamination, and (5) the capability of being bent at room temperature to

2

90° to a critical radius without metal rupture; the critical radius, defined as the distance from the pivot point to the inner skin surface of the laminate, is about equal to the total laminate thickness.

As used herein, the term "limiting dome height" is that height measured when testing sheet metal blank or laminate blanks in accordance with General Motors Corporation test procedures described in "Metal Progress", May 1975, pp. 52—54 and "Metals Engineering Quarterly", August 1975, pp. 53—57, using a blank width to clamp diameter ratio of about 1.0.

As used herein, the term "tightly adhered" means a lap shear value of at least about $34.5 \times 1.013 \times 10^5$ Pa at room temperature as measured by ASTM D 3165—73 using a lap length of about 0.64 cm.

Steel skin layers which are used in accordance with this invention each have a thickness from 50.8 to 508 μm and, preferably, from, 127 to 381 μm. A steel skin layer can be formed, for example, from steel, tin-free steel, tin-plate steel, aluminized steel, stainless steel, surface modified copper-clad stainless steel, terne plate steel, galvanized steel. These steels may also be surface treated or have thereon surface conversion coatings.

A preferred material is so-called tin-free steel (TFS) described in Canadian Patent 808,630 and U.S. Patents 3,526,486 and 3,826,628.

The steel skin layers on each side of the core can have the same or different thicknesses.

The polyolefin core of this invention can be formed from any polyolefin material which, when laminated to the steel skin layer, either directly thereto or by use of an intermediate adhesive layer, can pass a no load oven test without any delamination, after being subjected to a temperature of at least 87.8°C for a period of 30 minutes. The polyolefin core can have a thickness from 25 to 1549 μm, preferably from 254 to 1143 μm, inclusive of any adhesive layer(s) which may be employed. Exemplary polyolefins within the present invention include homopolymers and copolymers of ethylene, propylene and 4-methyl pentene-1. Especially preferred polyolefins are the ethylene polymers and copolymers and the propylene polymers and copolymers having a brittle temperature of less than about −1.1°C (as measured by ASTM D—746) and a Vicat softening point of greater than about 76.7°C (as measured by ASTM D—1875). Such materials include polypropylene, low density or high density polyethylene, ethylene/vinyl acetate copolymer, ethylene/acrylic acid copolymer, and ethylene/butene-1 and other alkene-1 copolymers.

The polyolefin of the core can be bonded directly to the steel skin layers or by the use of an intermediate adhesive layer therebetween. The intermediate adhesive layer can have a thickness from 2.54 to 127 μm, preferably from 7.6 to 63.5 μm. Such layer may be formed from any thermoplastic polymeric resinous material which will tightly adhere the core layer to the steel skin layers. A particulary preferred adhesive layer is a normally solid thermoplastic ethylene-based polymer modified by monomers having reactive carboxylic acid groups, particulary a copolymer of a major proportion of ethylene and a minor proportion, typically from 1 to 30, preferably from 2 to 20 percent by weight of an ethylenically unsaturated carboxylic acid. Specific examples of such suitable ethylenically unsaturated carboxylic acids (which term includes mono- and poly-basic acids, acid anhydrides, and partial esters of poly-basic acids) are acrylic acid, methacrylic acid, crotonic acid, fumaric acid, maleic acid, itaconic acid, maleic anhydride, monomethyl maleate, monoethyl maleate, mono-methyl fumarate, monoethyl fumarate, tripropylene glycol monomethyl ether acid maleate, or ethylene glycol monophenyl ether acid maleate. The carboxylic acid monomer is preferably selected from a, b-ethylenically unsaturated mono- and polycarboxylic acids and acid anhydrides having from 3 to 8 carbon atoms per molecule and partial esters of such polycarboxylic acid wherein the acid moiety has at least one carboxylic acid groups and the alcohol moiety has from 1 to 20 carbon atoms. The copolymer can also contain other copolymerizable monomers including an ester of acrylic acid. The comonomers can be combined in the copolymer in any way, e.g., as random copolymers, as block or sequential copolymers, or as graft copolymers. Materials of these kinds and methods of making them are readily known in the art. Specific examples of such copolymers are ethylene acrylic acid copolymer, ethylene methacrylic acid copolymer, and ethylene maleic acid copolymer.

The adhesive layer can first be applied to the steel skin layers, first be applied to the core, or can be applied to the steel skin layer and the core simultaneously. The adhesive layer can be applied using well known application techniques, such as, for example, solvent casting, roll coating, or, preferably, extrusion processes. When the adhesive layer is to be combined with the core prior to the lamination thereof to the metal skins, such layers can advantageously be introduced into the laminates by the well known coextrusion process or combining the conventional extrusion process with a film lamination technique.

In one embodiment of this invention, the core of polyolefin material may be irradiated with a high energy ionizing radiation source to achieve at least a partial crosslinking thereof for improved creep properties and thermal stability.

In another embodiment of this invention, the core is made electroconductive by incorporating conductive particulates, e.g., carbon black and metal particles, thereinto. The conductive core enhances the weldabilitly of the resultilng steel-polyolefin-steel laminates.

In yet another embodiment of this invention, the core of polyolefin material contains at least one reinforcing element embedded therein to enhance the mechanical properties of the resulting laminates. Such elements can be made from, for example, glass fibers, a perforated metallic sheet, an expanded metallic sheet, or a metallic wire screen.

Numerous solid fillers such as pigments, lubricants or antioxidants well known in the art, can also be incorporated into the core or adhesive layers, provided the resultant laminate retains the hereinbefore prescribed characteristics.

In one embodiment of this invention, a steel-polyolefin-steel laminate is produced by disposing a layer of a polyolefin material, which layer is continuously extruded from a conventional, screw-type extruder, between two steel skin layers which are fed continuously to a nip formed by a pair of opposing and counter-rotating laminating rolls. Heat and pressure sufficient to affect a bond between the steel skin layers and the polyolefin material are applied to the skin layers. This is accomplished by heating one or both of the laminating rolls, by preheating the steel skin layers, or through the heat of extrusion of the polyolefin material, or by a combination of such heating steps. The distance between the laminating rolls at the nip can be controlled to exert effective pressure to the steel-polyolefin-steel laminate to ensure an adequate bond between the metal skins and the polymer core. The laminating rolls can be covered with a layer of polytetrafluoroethylene to prevent sticking of the polymeric resinous material to the rolls.

In another embodiment of this invnetion, the steel skin layers are first coated with an adhesive layer on one side thereof and are fed continuously to the combining nip with the coated sides facing toward each other. A layer of polyolefin material is disposed between the two adhesive coated skin layers by continuous extrusion as described hereinabove.

In yet another embodiment of this invention, a multi-layered extrudate comprising an adhesive layer — a core layer — an adhesive layer is disposed continuously and simultaneously between the two steel skin layers or precoated steel skin layers by the well known coextrusion process.

The present invention is not limited by the process used to prepare the steel-polyolefin-steel structural laminates. Extrusion processes, i.e., extrusion coating or extrusion lamination; film lamination techniques; solution coating techniques or combination of such techniques well known in the art can readily be used to produce the laminates of this invention. It is essential, however, that the thermoplastic polymeric resinous material of the adhesive and core layers be subjected to a temperature of least equal to the softening point thereof, for a period of time sufficient to cause the polyolefin to tightly adhere but not undergoing significant degradation thereof, and effective pressure to achieve intimate contact between the polyolefin layers and the steel skin layers.

A preferred laminate of the present invention comprises tin-free steel, each skin layer being within the range of from 127 and 254 μm thick, with a core of ethylene homopolymers or copolymers or propylene homopolymers or copolymers having a brittle temperature of less than about −1.1°C (as measured by ASTM D—746) and a Vicat softening point of greater than about 76.7°C (as measured by ASTM D—1875) the total laminate thickness being within the range of from 635 to 1219 μm.

With each of the laminates, an adhesive can be employed between the steel skin layers and the polyolefin core. The preferred adhesive layer is made from a copolymer of ethylene and an ethylenically unsaturated carboxylic acid previously described. Most preferably, ethylene acrylic acid copolymer.

In a "no load oven test", used to determine the effect of heat on steel-polyolefin-steel laminates of the present invention, a steel-polyolefin-steel laminate is placed in a circulating-air oven maintained at a temperature of 87.8°C for a period of 30 minutes. Following the test, the laminate is examined for a change in appearance, dimension or other properties or a sign of delamination between individual layers.

The specific working examples that follow are intended to illustrate the invention but are not to be taken as limiting its scope.

## Examples

The following general procedures were used to make laminates within the scope of the present invention, which laminates are described in Table I. In one such procedure, two webs of steel skin material were extrusion coated on one side thereof with about 50.8 μm of an adhesive copolymer. Two webs of the adhesive coated steel were fed into a combining nip with the adhesive coated side facing toward each other. The combining nip was formed between a pair of opposed counter-rotating laminating rolls preheated to a temperature of about 176.7°C. The laminating rolls were adjusted to allow the desired amount of pressure to be applied as the webs (about 69 cm wide) passed between the rolls. A molten polyolefin core material was forced through a slot in a sheeting die of a conventional screw type extruder at a temperature of about 204.4°C into the combining nip and disposed between the two adhesive coated steel webs. The slot of the die had a generally rectangular configuration about 76 cm wide with a gap of approximately 406 μm. The laminating rolls had a diameter of 20 cm and were rotated at a speed of about 1.15 rpm.

A similar procedure described hereinabove, was used to make laminates of the present invention having no adhesive layers between the polyolefin core and the steel skins. However, the initial extrusion coating step, whereby the adhesive copolymer was applied to the steel skin layers, was not employed.

In another procedure, sheets of polyolefin core were prepared from resin granules using well known compression molding techniques. A sheet of core material was positioned between two sheets of adhesive copolymer.

The three-layer assembly comprising adhesive/core/adhesive was then positioned between two steel skin layers, and the resulting assembly was placed in a molding press and was treated at a temperature of 150°C for a period of 10 minutes under a pressure of about $1.4 \times 1.013 \times 10^5$ Pa. The pressure in the mold was then increased to about $7 \times 1.013 \times 10^5$ Pa. At the same time, the mold was allowed to cool to ambient temperature under the same pressure while cooling water was circulated through the plates of the molding press.

When the adhesive layer was applied in the form of powder or solvent based suspension, such layer was first applied to one side of each steel skin. Two adhesive coated steel skins were placed on each side of the polyolefin core with the coated sides facing toward the core. The three-layer assembly was then placed in the mold press and laminated under the conditions described hereinabove.

Certain properties of laminates of the present invention are reported in Table II.

0 134 958

TABLE I

| Example Number | Laminate Construction | Laminate Thickness (μm) |
|---|---|---|
| 1 (C) | 229μm TFS(1)/51μm EAA(2)/305μm HDPE(3)/51μm EAA(2)/229μm TFS(1) | 864 |
| 2 (C) | 152μm TFS(4)/51μm EAA(2)/559μm HDPE(3)/51μm EAA(2)/152μm TFS(4) | 965 |
| 3 (M) | 229μm TFS(1)/51μm EAA(5)/178μm HDPE(3)/51μm EAA(3)/229μm TFS(1) | 737 |
| 4 (M) | 229μm TFS(1)/51μm EAA(5)/406μm HDPE(3)/51μm EAA(3)/229μm TFS(1) | 965 |
| 5 (M) | 229μm TFS(1)/51μm EAA(5)/762μm HDPE(3)/51μm EAA(3)/229μm TFS(1) | 1321 |
| 6 (M) | 229μm TFS(1)/51μm EAA(5)/1041μm HDPE(3)/51μm EAA(3)/229μm TFS(1) | 1600 |
| 7 (M) | 229μm TFS(1)/51μm PAA(6)/279μm PP(7)/51μm PAA(6)/229μm TFS(1) | 1321 |
| 8 (M) | 229μm TFS(1)/51μm PAA(8)/305μm PP(7)/51μm PAA(8)/229μm TFS(1) | 864 |
| 9 (M) | 229μm TFS(1)/51μm EAA(5)/330μm 10% glass fiber & HDPE(3)/51μm EAA(5)/229μm TFS(1) | 889 |
| 10 (M) | 229μm TFS(1)/51μm EAA(5)/254μm 35% glass fiber & HDPE(3)/51μm EAA(5)/229μm TFS(1) | 8139 |
| 11 (C) | 229μm TFS(1)/356μm HDPE(9)/229μm TFS(1) | 889 |
| 12 (C) | 229μm TFS(1)/356μm EAA(2)/356μm LDPE(10)/51μm EAA(2)/229μm TFS(1) | 914 |
| 13 (C) | 152μm TFS(4)/51μm EAA(2)/838μm LDPE(10)/51μm EAA(2)/152μm TFS(4) | 1245 |

TABLE I (continued)

Notes:

(C) — Sample prepared by continuous lamination.

(M) — Sample prepared using a molding press.

TFS(1) — Tin free steel, Type D, T-1 temper.

EAA(2) — Ethylene acrylic acid copolymer coating density: 0.930—0.935, 8% by weight acrylic acid, 5 M.I.

HDPE(3) — High density polyethylene, density: 0.956, 0.08 M.I.

TFS(4) — Tin free steel, Type MR, T-3 temper.

EAA(5) — Ethylene acrylic acid copolymer film, 8% by weight acrylic acid.

PAA(6) — Polypropylene acrylic acid graft copolymer powder.

PP(7) — Polypropylene.

PAA(8) — Polypropylene acrylic acid graft copolymer suspension.

HDPE(9) — High density polyethylene, density: 0.967, 0.3 M.I.

LDPE(10) — Low density polyethylene, density: 0.921, 0.7 M.I.

TABLE II

| Example Number | Laminate/Skin Flexural Modulus Ratio(%) | Core(1)/Skin Thickness Ratio | Laminate/Skin Density Ratio(%) | Limiting Dome Height Ratio(%) | Lap Shear(2) (bar) |
|---|---|---|---|---|---|
| 1 | 74 | 1.9 | 58 | 91 | 117 |
| 2 | 62 | 4.2 | 40 | 76 | 96 |
| 3 | 86 | 1.3 | 66 | ND | 96 |
| 4 | 78 | 2.3 | 53 | ND | 96 |
| 5 | 64 | 3.9 | 52 | ND | 96 |
| 6 | 54 | 5.2 | 37 | ND | 96 |
| 7 | 87 | 1.7 | 59 | ND | ND |
| 8 | 82 | 1.9 | 57 | ND | ND |
| 9 | 82 | 1.9 | 58 | ND | ND |
| 10 | 89 | 1.6 | 64 | ND | ND |
| 11 | 80 | 1.7 | 61 | 88 | 131 |
| 12 | 45 | 2.1 | 55 | 94.0 | 83 |
| 13 | 67 | 6.0 | 34 | 79 | 83 |

TABLE II (continued)

Notes:

(1) — Core includes adhesive layers, if any.

(2) — Values typical of this type of laminate.

ND — Not determined.

As shown in Table II, steel-polyolefin-steel laminates of the present invention are of light weight and can readily be formed as evidenced by relatively high values for the limiting dome height ratio. At the same time, the laminates have surprisingly high stiffness and lap shear values.

In addition, Examples 1—4 and 11—13 were tested and passed the 90° bend test. Other examples were not tested. Further, Example 13 was subjected to and passed the no load oven test.

**Claims**

1. A steel-polyolefin-steel structural laminate comprising a core of polyolefin having tightly adhered to each side thereof a steel skin layer characterized in that each steel skin layer is from 50.8 µm to 508 µm thick, said laminate further having a ratio of core thickness to skin thickness of less than 9:1, and a total thickness of from 127 to 1651 µm; the materials of construction of said polyolefin core and steel skins and the geometry of the laminate being such that the laminate has (1) a flexural stiffness at least 40 percent that of the solid steel of the skin layer of the lower flexural modulus having the same thickness as said laminate as measured by ASTM D790 on a 2.54 cm wide sample having a 10.16 cm span under three point loading conditions, (2) a density from 25 percent to 90 percent that of the average of the two solid steel skin layers, (3) as a measure of stretch formability a limiting dome height of at least about 60 percent of the limiting dome height of the solid steel skin layer of the lower ultimate elongation having the same thickness as the laminate, (4) the capability of being subjected to a no load oven test, subsequent to forming of said laminate, at a temperature of at least 87.8°C for a period of 30 minutes without delaminating, and (5) the capability of being bent at room temperature to 90% to a critical radius without metal rupture, the critical radius, defined as the distance from the pivot point to the inner skin surface of the laminate, being about equal to the total laminate thickness.

2. The structural laminate of Claim 1 wherein the core of polyolefin is selected from homopolymers and copolymers of ethylene or propylene and having a brittle temperature of less than about −1.1°C (as measured by ASTM D—746) and a Vicat softening point of greater than about 76.7°C (as measured by ASTM D—1875).

3. The structural laminate of Claim 1 or 2 wherein the core of polyolefin has been irradiated for improved creep properties and thermal stability.

4. The structural laminate of Claim 1, 2 or 3, wherein the core of polyolefin is electroconductive.

5. The structural laminate of any one of the preceding claims, wherein the core of polyolefin contains at least one reinforcing element embedded therein.

6. The structural laminate of Claim 5 wherein the reinforcing element is an expanded steel sheet.

7. The structural laminate of any one of the preceding claims, having a thickness from 508 to 1143 µm.

8. The structural laminate of any one of the preceding claims, wherein each steel skin layer has a thickness of from 127 to 381 µm.

9. The structural laminate of Claim 7 or 8 wherein the thickness of each skin being within the range of from 127 to 254 µm and the total laminate thickness being within the range of from 584 to 1219 µm.

10. The structural laminate of any one of the preceding claims, wherein the rate of polyolefin is high density polyethylene.

11. The structural laminate of any one of the preceding claims, wherein the core is tightly adhered to the metal skin layers by the use of an intermediate adhesive layer therebetween.

12. The structural laminate of Claim 11 wherein the intermediate adhesive layer comprises a copolymer of ethylene and ethylenically unsaturated carboxylic acid.

13. The structural laminate of Claim 12 wherein the carboxylic acid is acrylic acid.

**Patentansprüche**

1. Stahl-Polyolefin-Stahl-Konstruktionslaminat, bestehend aus einem Kern aus Polyolefin, an dem auf jeder Seite eine Stahlaußenschicht eng anliegend haftet, dadurch gekennzeichnet, daß jede Stahlaußenschicht 50,8 bis 508 µm dick ist, wobei das Laminat weiterhin ein Verhältnis von Kerndicke zu Außenschichtdicke von weniger als 9:1 aufweist und eine Gesamtdicke von 127 bis 1651 µm aufweist; daß die Konstruktions-Werkstoffe des Polyolefinkerns und der Stahlaußenschichten und die Geometrie des Laminats so sind, daß das Laminat (1) eine Biegesteifheit von mindestens 40% der Biegesteifheit des festen Stahls der Außenschicht des niedrigeren Elastizitätsmoduls mit derselben Dicke des Laminats, gemessen durch ASTM D790, an einer 2,54 cm breiten Probe mit einer Spannweite von 10,16 cm unter Dreipunkt-Belastungsbedingungen hat, (2) eine Dichte von 25 bis 90% der Dichte des Durchschnitts von zwei festen Stahlaußenschichten hat (3) als ein Maß der Streckformbarkeit eine Grenzkuppelhöhe von mindestens etwa 60% der Grenzverformungshöhe des festen Stahls der Außenschicht mit der niedrigeren Bruchdehnung mit derselben Dicke, die das Laminat hat, (4) die Fähigkeit hat, einem "No-load-oven-test" unterworfen zu werden, anschließend an das Formen des Laminats bei einer Temperatur von mindestens 87,8°C über einen Zeitraum von 30 Minuten ohne Delaminierung und (5) die Fähigkeit hat, bei Raumtemperatur zu 90° gebogen zu werden zu einem kritischen Radius ohne Metallbruch, wobei der kritische Radius definiert ist als der Abstand von dem Schwenkpunkt zu der inneren Außenschichtoberfläche des Laminat, die etwa gleich ist der gesamten Laminatdicke.

2. Konstruktionslaminat nach Anspruch 1, worin der Kern aus Polyolefin ausgewählt ist aus Homopolymeren und Copolymeren von Ethylen und Propylen und eine Versprödungstemperatur von weniger als etwa −1,1°C (gemessen nach ASTM D—746) une eine Vicat Erweichungstemperatur von mehr als 76,7°C (gemessen nach ASTM D—1875) hat.

3. Konstruktionslaminat nach Anspruch 1 oder 2, worin der Kern aus Polyolefin zur Verbesserung der Kriecheigenschaften und der Wärmestabilität bestrahlt wurde.

4. Konstruktionslaminat nach Anspruch 1, 2 oder 3, , worin der Kern aus Polyolefin elektrisch leitend ist.

5. Konstruktionslaminat nach einem der vorhergehenden Ansprüche, worin der Kern aus Polyolefin mindestens ein verstärkendes Element eingebettet enthält.

6. Konstruktionslaminat nach Anspruch 5, worin das verstärkende Element ein expandiertes Stahlblech ist.

7. Konstruktionslaminat nach einem der vorhergehenden Ansprüche, mit einer Dicke von 508 dis 1143 µm.

8. Konstruktionslaminat nach einem der vorhergehenden Ansprüche, worin jeder Stahlaußenschicht eine Dicke von 127 bis 381 µm hat.

9. Konstruktionslaminat nach Anspruch 7 oder 8, worin die Dicket jeder Schitcht im Bereich von 127 bis 254 µm liegt und die gesamte Laminatdicke im Bereich von 584 bis 1219 µm liegt.

10. Konstruktionslaminat nach einem der vorhergehenden Ansprüche, worin der Kern aus Polyolefin Polyethylen hoher Dichte ist.

11. Konstruktionslaminat nach einem der vorhergehenden Ansprüche, worin der Kern eng anliegend an den Metallaußenschichten haftet durch die Verwendung eine dazwischenliegenden Klebstoffschicht.

12. Konstruktionslaminat nach Anspruch 11, worin die Zwischenklebstoffschicht ein Copolymer aus Ethylen und ethylenisch ungesättigten Carbonsäuren umfaßt.

13. Konstruktionslaminat nach Anspruch 12, worin die Carbonsäure Acrylsäure ist.

**Revendications**

1. Stratifié structurel acier-polyoléfine-acier comprenant une âme en polyoléfine sur chacune des faces de laquelle adhère étroitement une pellicule superficielle en acier, caractérisé en ce que chaque pellicule superficielle en acier est épaisse de 50,8 µm à 508 µm, ce stratifié ayant en outre un rapport de l'épaisseur de l'âme à l'épaisseur des pellicules qui est inférieur à 9:1 et une épaisseur totale qui est de 127 à 1651 µm, les matières à partir desquelles sont réalisées cette âme en polyoléfine et ces pellicules en acier et la géométrie du stratifié étant telles que ce stratifié offre (1) une résistance à la flexion qui vaut au moins 40 pour cent de celle de l'acier isolé de la pellicule superficielle de module en flexion le plus faible et ayant la même épaisseur que ledit stratifié, lorsque cette résistance à la flexion est mesurée par la méthode ASTM D—790 sur un échantillon de 2,54 cm de large et présentant un portée entre appuis de 10,16 cm, et sous des conditions de mise en charge entrois points, (2) une densité qui vaut 25 pour cent à 90 pour cent de celle de la moyenne des deux pellicules superficielles en acier isolées, (3), en tant que mesure de l'aptitude au drapage, une hauteur limite de bombé de l'acier isolé de la pellicule superficielle d'allongement à la rupture le plus faible et offrant la même épaisseur que le stratifié, (4) la capacité, après que ce stratifié ait été conformé, d'être soumis, sans décollement, à un essai au four sous charge nulle, à une température d'au moins 87,8°C et pendant une période de 30 minutes, et (5) la capacité d'être plié, à la température ambiante, jusqu'à 90° et sous un rayon critique, sans rupture du métal, ce rayon critique, defini comme étant la distance du point de pivotement à la surface de la pellicule intérieure du stratifié, étant environ égal à l'épaisseur du stratifié.

2. Stratifié structurel selon la revendication 1, dans lequel l'âme en polyoléfine est choisie parmi des homopolymères et des copolymères d'éthylène ou de propylène présentant un température de fragilité inférieure à environ −1,1°C (telle que mesurée par la méthode ASTM D—746) et un point de ramollissement Vicat supérieur à environ 76,7°C (tel que mesuré par la méthode ASTM D—1875).

3. Stratifié structurel selon la revendication 1 ou 2, dans lequel l'âme en polyoléfine a été soumise à un rayonnement destiné à améliorer les propriétés de fluage et la stabilité thermique. .

4. Stratifié structurel selon la revendication 1, 2 ou 3, dans lequel l'âme en polyoléfine est électroconductrice.

5. Stratifié structurel selon l'une quelconque des revendications précédentes, dans lequel l'âme en polyoléfine contient au moins un élément de renforcement qui y est noyé.

6. Stratifié structurel selon la revendication 5, dans lequel l'élément de renforcement est une feuille d'acier déployé.

7. Stratifié structurel selon l'une quelconque des revendications précédentes ayant une épaisseur de 508 à 1143 µm.

8. Stratifié structurel selon l'une quelconque des revendications précédentes, dans lequel chaque pellicule superficielle en acier a une épaisseur de 127 à 381 µm.

9. Stratifié structurel selon la revendication 7 ou 8, dans lequel l'épaisseur de chaque pellicule superficielle est dans la gamme de 127 à 254 µm et l'épaisseur totale du stratifié est dans la gamme de 584 à 1219 µm.

10. Stratifié structurel selon l'une quelconque des revendications précédentes, dans lequel l'âme en polyoléfine est en polyéthylène haute densité.

11. Stratifié structurel selon l'une quelconque des revendications précédentes, dans lequel l'âme adhère étroitement aux pellicules superficielles en métal grâce à l'utilisation d'une couche adhésive intermédiaire située entre elles.

12. Stratifié structurel selon la revendication 11, dans lequel la couche adhésive intermédiaire est constituée par un copolymère d'éthylène et d'acide carboxylique à insaturation éthylénique.

13. Stratifié structurel selon la revendication 12, dans lequel l'acide carboxylique est l'acide acrylique.